# EUROPÄISCHE PATENTSCHRIFT

(11) **EP 0 597 411 B1**
(45) Veröffentlichungstag und Bekanntmachung des Hinweises auf die Patenterteilung: **28.04.1999**
(21) Anmeldenummer: 93118037.6
(22) Anmeldetag: 08.11.1993
(51) Int. Cl.: C09B 62/517

(54) **Verfahren zur Herstellung von Phthalocyaninreaktivfarbstoffen**
Process for the preparation of phthalocyanine reactive dyes
Procédé pour la préparation de colorants réactifs de type phtalocyanine

(30) Priorität: 11.11.1992 DE 4238047
(43) Veröffentlichungstag der Anmeldung: 18.05.1994
(73) Patentinhaber: BASF Aktiengesellschaft, 67063 Ludwigshafen (DE)
(72) Erfinder: Dornhagen, Jürgen, Dr., D-6703 Limburgerhof (DE); Patsch, Manfred, Dr., D-6706 Wachenheim (DE)

(56) Entgegenhaltungen:
- EP-A- 0 074 837
- EP-A- 0 231 837
- EP-A- 0 304 751
- FR-A- 2 427 365

## Beschreibung

Die vorliegende Erfindung betrifft ein neues Verfahren zur Herstellung von Phthalocyaninreaktivfarbstoffen, die β-substituierte Ethylsulfonylgruppen oder Vinylsulfonylgruppen aufweisen, durch Umsetzung eines Phthalocyaninsulfonsäurechlorids mit Aminen, die β-substituierte Ethylsulfonylgruppen oder Vinylsulfonylgruppen aufweisen, und gegebenenfalls mit weiteren Aminen in Gegenwart eines Katalysators.

Die Umsetzung von Phthalocyaninsulfonsäurechloriden mit reaktive Gruppen tragenden Aminen in Gegenwart von speziellen Pyridincarbon- oder Pyridinsulfonsäuren als Katalysatoren ist aus der DE-A-2 824 211 oder DE-A-2 906 442 bekannt. Weiterhin beschreibt die EP-A-231 837 die Anwendung von Pyridincarbonamiden oder Pyridinsulfonamiden als Katalysatoren für diesen Zweck.

Aufgabe der vorliegenden Erfindung war es, ein neues Verfahren zur Herstellung von Phthalocyaninreaktivfarbstoffen bereitzustellen, bei dem man Phthalocyaninsulfonsäurechloride mit Aminen, die reaktive Gruppen tragen, in vorteilhafter Weise zur Reaktion bringt. Die Zielprodukte sollten dabei in hoher Ausbeute und Reinheit anfallen.

Es wurde nun gefunden, daß die Herstellung von metallfreien oder metallhaltigen Phthalocyaninreaktivfarbstoffen, die als reaktive Gruppen eine oder mehrere Ethylsulfonylgruppen, welche in β-Position einen unter alkalischen Reaktionsbedingungen abspaltbaren Rest als Substituenten tragen, oder Vinylsulfonylgruppen aufweisen, durch Umsetzung eines metallfreien oder metallhaltigen Phthalocyaninsulfonsäurechlorids mit primären oder sekundären Aminen, die eine oder mehrere Ethylsulfonylgruppen, welche in β-Position einen unter alkalischen Reaktionsbedingungen abspaltbaren Rest als Substituenten tragen, oder Vinylsulfonylgruppen aufweisen, und gegebenenfalls mit weiteren primären oder sekundären Aminen aus der aliphatischen, aromatischen oder heterocyclischen Reihe in Gegenwart eines Katalysators vorteilhaft gelingt, wenn man die Umsetzung in Gegenwart eines Heterocyclus als Katalysator durchführt, der ausgewählt ist aus der Klasse, bestehend aus 1-(C₁-C₄-Alkyl)imidazolen, in denen die Alkylgruppe gegebenenfalls durch C₁-C₄-Alkoxy substituiert ist, 1-Carboxymethylimidazol, 1,2-Dimethylimidazol, 1-Methylimidazol-5-carbonsäure, 1-Carboxymethyl-1,3,4-triazol, 4-(C₁-C₄-Dialkylamino)pyridin, 4-(Pyrrolidin-1-yl)pyridin, 4-(Piperidin-1-yl)pyridin, 4- 4-(Morpholin-4-yl)pyridin, 4-(Piperazin-1-yl)pyridin, 4-[4-(C₁-C₄-Alkyl)piperazin-1-yl]pyridin und Dimethyltetrazol.

Neben den bereits einzeln aufgeführten Heterocyclen sind weitere geeignete Heterocyclen z. B. 1-Methylimidazol, 1-Ethylimidazol, 1-Propylimidazol, 1-Isopropylimidazol, 1-Butylimidazol, 1-Isobutylimidazol, 1-sec-Butylimidazol, 1-(2-Methoxyethyl)imidazol, 1-(2-Ethoxyethyl)imidazol, 1-(2-Propoxyethyl)imidazol, 1-(2-Isopropoxyethyl)imidazol, 1-(2-Butoxyethyl)imidazol, 1-(2-Methoxypropyl)imidazol, 1-(3-Methoxypropyl)imidazol, 1-(2-Ethoxypropyl)imidazol, 1-(3-Ethoxypropyl)imidazol, 1-(2-Methoxybutyl)imidazol, 1-(4-Methoxybutyl)imidazol, 1-(2-Ethoxybutyl)imidazol, 1-(4-Ethoxybutyl)imidazol, 4-Dimethylaminopyridin, 4-Diethylaminopyridin, 4-(4-Methylpiperazin-l-yl)pyridin oder 4-(4-Ethylpiperazin-l-yl)pyridin.

Bevorzugt wird das erfindungsgemäße Verfahren in Gegenwart eines 1-(C₁-C₄-Alkyl)imidazols durchgeführt.

Bei den Phthalocyaninreaktivfarbstoffen im erfindungsgemäßen Verfahren handelt es sich um metallfreie oder metallhaltige Phthalocyanine. Metallhaltige Phthalocyanine sind insbesondere Kupfer-, Kobalt- oder Nickelphthalocyanine. Die Herstellung von Kupferphthalocyaninreaktivfarbstoffen ist bevorzugt.

Bevorzugt ist weiterhin ein Verfahren zur Herstellung von Phthalocyaninreaktivfarbstoffen der Formel I 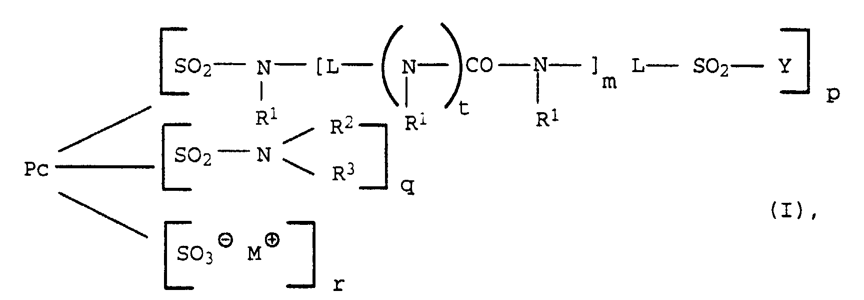 in der
- Pc: den Rest eines metallfreien oder metallhaltigen Phthalocyaninsystems, das gegebenenfalls durch Chlor oder Phenyl substituiert ist,
- R¹: Wasserstoff oder C₁-C₆-Alkyl,
- R² und R³: unabhängig voneinander jeweils Wasserstoff, C₁-C₆-Alkyl, das gegebenenfalls durch 1 oder 2 Sauerstoffatome in Etherfunktion unterbrochen ist, Phenyl oder zusammen mit dem sie verbindenden Stickstoffatom einen fünf- oder sechsgliedrigen gesättigten heterocyclischen Rest, der weitere Heteroatome aufweisen kann,
- L: C₂-C₄-Alkylen, das gegebenenfalls durch ein Sauerstoffatom in Etherfunktion unterbrochen ist, Naphthylen oder einen Rest der Formel 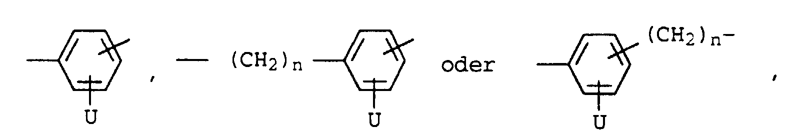 worin U für Wasserstoff, Hydroxysulfonylmethyl oder Hydroxysulfonyl und n für 1 oder 2 stehen,
- Y: Vinyl oder einen Rest der Formel C₂H₄-Q, worin Q für eine unter alkalischen Reaktionsbedingungen abspaltbare Gruppe steht,

- M^{⊕}: das Äquivalent eines Kations,
- m: 0 oder 1,
- p: 1 bis 3,
- q: 0 bis 3,
- r: 1 bis 3 und
- t: 0 oder 1 bedeuten,
mit der Maßgabe, daß die Summe von p, q und r höchstens 4 ist indem man ein Phthalocyaninsulfonsäurechlorid der Formel II 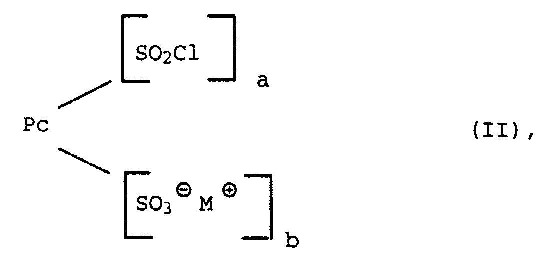 in der Pc und M^{⊕} jeweils die obengenannte Bedeutung besitzen und a 1 bis 4 und b 0 bis 3 bedeuten, mit der Maßgabe, daß die Summe von a und b höchstens 4 ist, oder eine Mischung von Phthalocyaninsulfonsäurechloriden der Formel II in wäßrigem Medium mit einem Amin der Formel III 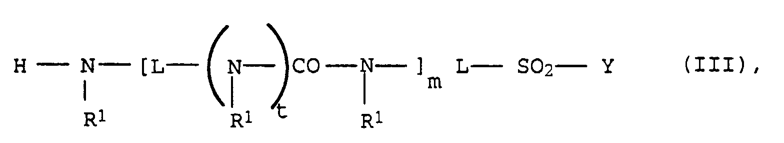 in der R¹, L, Y, m und t jeweils die obengenannte Bedeutung besitzen, und gegebenenfalls mit einem Amin der Formel IV 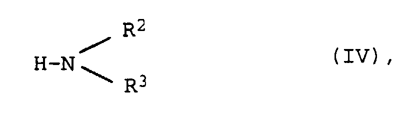 in der R² und R³ jeweils die obengenannte Bedeutung besitzen, wobei die Reihenfolge der Umsetzung mit den Aminen III und IV beliebig sein kann, in Gegenwart eines der obengenannten Heterocyclen als Katalysator umsetzt.

Reste R¹, R² und R³ sind z. B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R² und R³ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 4-Methoxybutyl, 2- oder 4-Ethoxybutyl, 3,6-Dioxaheptyl oder 3,6-Dioxaoctyl.

Wenn die Reste R² und R³ zusammen mit dem sie verbindenden Stickstoffatom einen fünf- oder sechsgliedrigen gesättigten heterocyclischen Rest, der weitere Heteroatome aufweisen kann, bedeuten, so können dafür z. B. Pyrrolidinyl, Piperidinyl, Morpholinyl, Piperazinyl oder N-(C₁-C₄-Alkyl)piperazinyl in Betracht kommen.

Reste L sind z. B. (CH₂)₂, (CH₂)₃, (CH₂)₄, CH(CH₃)CH₂, CH(CH₃)CH(CH₃) (CH₂)₂O(CH₂)₂, Phenylen, Hydroxysulfonylmethylphenylen, Hydroxysulfonylphenylen, Naphthylen oder Phenylenmethylen.

M^{⊕} stellt das Äquivalent eines Kations dar. Es stellt entweder ein Proton dar oder leitet sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl- Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch Sauerstoffatome in Etherfunktion unterbrochen sein kann. Das Ammoniumion kann sich auch von den eingangs aufgeführten Heterocyclen ableiten.

Besonders als Kationen hervorzuheben sind Protonen oder Lithium-, Natrium- oder Kaliumionen.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 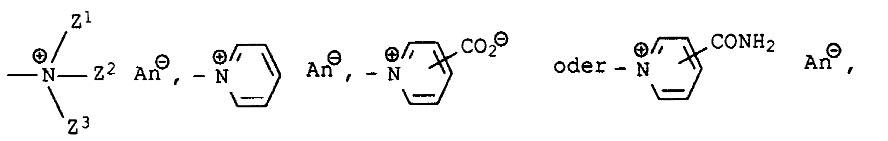 wobei Z¹, Z² und Z³ gleich oder verschieden sind und unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommmen.

Hervorzuheben ist die Herstellung von Phthalocyaninreaktivfarbstoffen der Formel I, in der
- Pc: den Rest eines Kupferphthalocyaninsystems, das nicht weiter substituiert ist,
- R¹: Wasserstoff oder C₁-C₄-Alkyl,
- R² und R³: unabhängig voneinander jeweils Wasserstoff oder C₁-C₄-Alkyl, das gegebenenfalls durch ein Sauerstoffatom in Etherfunktion unterbrochen ist,
- L: C₂-C₃-Alkylen, Phenylen oder Phenylenmethylen und
- m und t: jeweils 0 bedeuten und Y, M^{⊕} ,p,q und r jeweils die obengenannte Bedeutung besitzen.

Besonders zu nennen ist die Herstellung von Phthalocyaninreaktivfarbstoffen der Formel I, in der m 0, p 1,3 bis 2,5 und q 0 bedeuten.

Besonders zu nennen ist weiterhin die Herstellung von Phthalocyaninreaktivfarbstoffen der Formel I, in der m 0, R¹ Wasserstoff und L Phenylen bedeuten.

Besonders zu nennen ist weiterhin die Herstellung von Phthalocyaninreaktivfarbstoffen der Formel I, in der q 0 bedeutet.

Besonders zu nennen ist weiterhin die Herstellung von Phthalocyaninreaktivfarbstoffen der Formel I, in der Y Vinyl, 2-Sulfatoethyl oder 2-Thiosulfatoethyl bedeutet.

Die erfindungsgemäß herstellbaren Phthalocyaninreaktivfarbstoffe, beispielsweise die Farbstoffe der Formel I, werden in der Regel in Form von Gemischen der Einzelverbindungen, beispielsweise der Einzelverbindungen der Formel I, erhalten, wobei sich diese Einzelverbindungen voneinander durch den Substitutionsgrad der Hydroxysulfonylgruppen und Sulfonamidgruppen am Phthalocyaninrest unterscheiden - am Beispiel der Formel I durch den Substitutionsgrad der mit den Indizes p,q und r bezeichneten Reste. Am Beispiel der Formel I sind deshalb bei der Bezeichnung der Formel des erhaltenen Phthalocyaninreaktivfarbstoffs die Indices p, q und r in der Regel gebrochenene Zahlen.

Das erfindungsgemäße Verfahren wird zweckmäßig in wäßrigem Medium bei einem pH-Wert von 3,5 bis 8,5, vorzugsweise 4 bis 8, insbesondere 5 bis 7, unter Zusatz eines säurebindenden Mittels durchgeführt.

Das erfindungsgemäße Verfahren kann bei einer Temperatur von 0 bis 60°C durchgeführt werden. Bevorzugt erfolgt die Umsetzung bei einer Temperatur von 10 bis 35°C.

Säurebindende Mittel, die im erfindungsgemäßen Verfahren verwendet werden, sind beispielsweise Hydroxide, Carbonate oder Hydrogencarbonate, sekundäre oder tertiäre Phosphate, Borate oder Acetate der Metalle der ersten bis dritten Gruppe des Periodensystems, vorzugsweise die Natrium- oder Kaliumverbindungen oder auch Calciumverbindungen.

Zur Verbesserung der Löslichkeit der Ausgangs- oder Endprodukte im wäßrigen Reaktionsmedium kann man gegebenenfalls organische Lösungsmittel, vorzugsweise Amide aliphatischer Carbonsäuren, wie N,N-Dimethylformamid, N,N-Dimethylacetamid, N-Methylpyrrolidinon oder 1,3-Dimethyltetrahydropyrimid-2-on, zusetzen.

Bezogen auf 1 mol Phthalocyaninsulfonsäurechlorid kommen in der Regel 1 bis 8 mol, vorzugsweise 1,5 bis 4 mol, eines Amins, das den reaktiven Anker trägt, sowie 0 bis 4 mol, vorzugsweise 0 bis 2 mol des "nichtreaktiven Amins" zur Anwendung.

Die als Katalysator wirkenden Heterocyclen werden in einer Menge von 0,1 bis 1 mol-%, vorzugsweise 0,1 bis 0,5 mol-%, jeweils bezogen auf das Gewicht an Phthalocyaninsulfonsäurechlorid, angewandt.

Das erfindungsgemäße Verfahren wird zweckmäßig so durchgeführt, daß man Phthalocyaninsulfonsäurechlorid, gegebenenfalls in Anwesenheit von Hilfsmitteln, wie Dispergiermittel oder Entschäumer, in Wasser suspendiert und unter den obengenannten Reaktionsbedingungen mit dem Eintrag des Katalysators, des Amins, welches den reaktiven Anker trägt, und gegebenenfalls des "nichtreaktiven" Amins beginnt. Nach beendeter Umsetzung, die in der Regel 6 bis 8 Stunden in Anspruch nimmt, kann der Reaktivfarbstoff aus der entstandenen Reaktionslösung z. B. durch Sprühtrocknen oder Aussalzen, beispielsweise mit Natrium- oder Kaliumchlorid, isoliert werden.

Es ist aber auch möglich, die resultierende Farbstofflösung, nach entsprechender Standardisierung und gegebenenfalls weiterer Zugabe von Puffersubstanzen, ohne weitere Isolierung des entstandenen Farbstoffs direkt als Flüssigeinstellung zum Färben oder Bedrucken von Fasermaterialien zu verwenden.

Das erfindungsgemäße Verfahren kann in der Weise modifiziert werden, daß vor, während oder nach der eigentlichen Kondensationsreaktion ein Teil der Sulfonsäurechloridgruppen des Phthalocyaninsulfonsäurechlorids, z. B. der Formel II, durch Hydrolyse in Hydroxysulfonylgruppen übergeführt wird. Es kann die Kondensation beispielsweise so durchgeführt werden, daß gleichzeitig mit der Umsetzung der Amine, z. B. des Amine III und/oder IV, ein Teil der Sulfonsäurechloridgruppen hydrolysiert wird. Es kann auch so verfahren werden, daß zunächst mit einer zur vollständigen Umsetzung aller Sulfonsäurechloridgruppen nicht ausreichenden Menge an Amin, z. B. dem Amin der Formel III und/oder IV, umgesetzt wird und daß anschließend die restlichen Sulfonsäurechloridgruppen durch einen besonderen Reaktionsschritt in saurem bis schwach alkalischem Milieu, z. B. bei einem pH-Wert von 1 bis 8, gegebenenfalls in der Wärme, z. B. bei einer Temperatur von 20 bis 60°C, hydrolysiert werden.

Das neue Verfahren liefert die Zielprodukte in hoher Ausbeute und Reinheit.

Die mittels des erfindungsgemäßen Verfahrens herstellbaren Phthalocyaninreaktivfarbstoffe eignen sich zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sie sich zum Färben und Bedrucken von Textilmaterial auf der Basis von Wolle oder insbesondere von Baumwolle. Man erhält Ausfärbungen in türkisblauen Farbtönen.

Die folgenden Beispiele sollen die Erfindung näher erläutern.

### Beispiel 1

In 1000 ml Wasser wurden 0,4 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 450 g (1,6 mol)4-(2-Sulfatoethylsulfonyl)anilin und 3,3 g (0,04 mol) 1-Methylimidazol eingetragen. Durch Zugabe von festem Natriumhydrogencarbonat wurde der pH-Wert bei 6,2 bis 6,5 gehalten (Temperatur ca. 25°C). Nach 7 h war die Reaktion beendet. Aus der klaren blauen Lösung wurde der Farbstoff durch Aussalzen mit Kaliumchlorid isoliert. Die Konstitution (in Form der freien Säure) wurde, wie auch in den folgenden Beispielen, nach der in Beispiel 1 der US-A-4 576 755 beschriebenen Methode bestimmt und ergibt sich zu etwa:

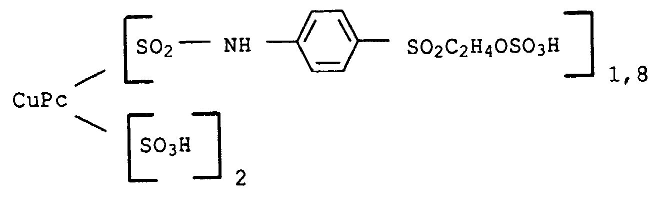

### Beispiel 2

In 100 ml Wasser wurden 0,1 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 112 g (0,4 mol) 4-(2-Sulfatoethylsulfonyl)anilin und 4,1 g (0,05 mol) 1-Methylimidazol eingetragen. Durch Zugabe von festem Natriumhydrogencarbonat wurde der pH-Wert bei 6,2 bis 6,5 gehaltenen (Temperatur ca. 25°C). Nach 7 h war die Reaktion beendet. Aus der klaren blauen Lösung wurde der Farbstoff durch Sprühtrocknen isoliert. Die Konstitution (in Form der freien Säure) ergibt sich zu etwa:

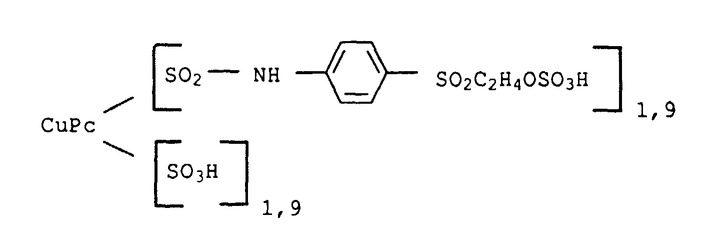

### Beispiel 3

In 500 ml Wasser wurden 0,2 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 169 g (0,6 mol) 4-(2-Sulfatoethylsulfonyl)anilin und 1,6 g (0,02 mol) 1-Methylimidazol eingetragen. Durch Zugabe von festem Natriumhydrogencarbonat wurde der pH-Wert bei 6,2 bis 6,5 gehalten (Temperatur ca. 25°C). Nach ca. 7 h war die Reaktion beendet. Aus der klaren blauen Lösung wurde der Farbstoff durch Aussalzen mit Kaliumchlorid isoliert. Die Konstitution (in Form der freien Säure) ergibt sich zu etwa:

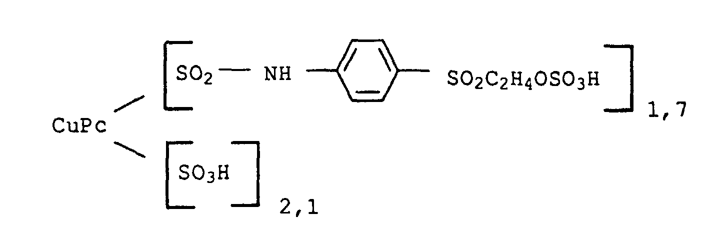

### Beispiel 4

Man verfuhr analog Beispiel 2, verwendete jedoch 1,2 g (0,01 mol) 4-Dimethylaminopyridin als Katalysator. Es ergibt sich die Konstitution (in Form der freien Säure) zu etwa:

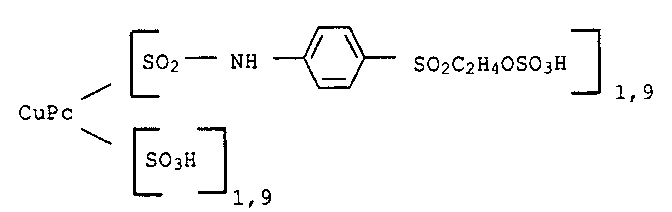

### Beispiel 5

a) Man verfuhr analog Beispiel 2, verwendete jedoch 1 g (0,01 mol) Dimethyltetrazol als Katalysator. Es ergibt sich die Konstitution (in Form der freien Säure) nach 8 h Reaktionszeit zu etwa: 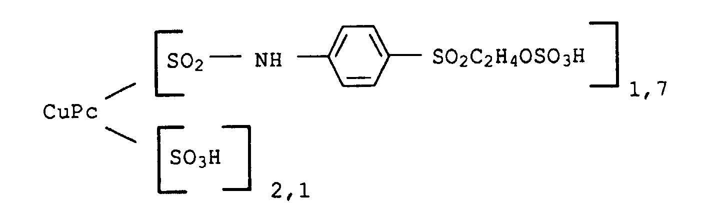
b) Nach insgesamt 22 h Reaktionszeit ergibt sich die Konstitution zu etwa

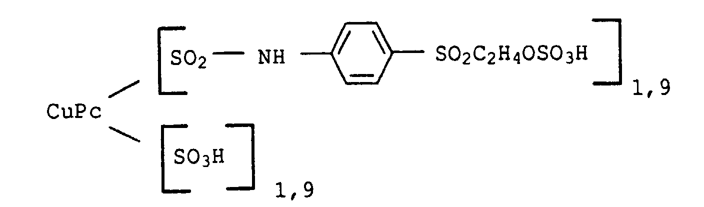

### Beispiel 6

In 220 ml Wasser wurden in Gegenwart eines Dispergiermittels 0,1 mol Kupferphthalocyaninsulfonsäurechlorid (mit etwa 3,8 Sulfonsäurechloridgruppen) als feuchter Preßkuchen suspendiert, 87,3 g (0,3 mol) 3-(2-Sulfatoethyl)anilin und 0,8 g (0,01 mol) 1-Methylimidazol zugegeben und durch Zugabe von festem Natriumhydrogencarbonat ein pH-Wert von 6,2 bis 6,5 eingehalten. Nach etwa 8 h war die Reaktion beendet. Die Konstitution (in Form der freien Säure) ergibt sich zu etwa:

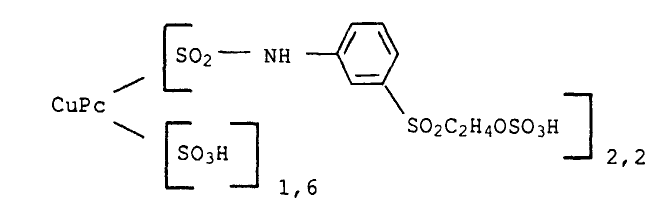

### Beispiel 7

In 220 ml Wasser wurden in Gegenwart eines Dispergiermittels 0,1 mol Kupferphthalocyaninsulfonsäurechlorid (mit etwa 3,8 Sulfonsäurechloridgruppen) als feuchter Preßkuchen suspendiert, 56,5 g (0,2 mol) 3-(2-Sulfatoethyl)anilin, 56,5 g (0,2 mol) 4-(2-Sulfatoethyl)anilin und 0,8 g (0,01 mol) 1-Methylimidazol zugegeben und durch Zugabe von festem Natriumhydrogencarbonat ein pH-Wert von 6,2 bis 6,5 eingehalten. Nach etwa 8 h war die Reaktion beendet.
Die Konstitution (in Form der freien Säure) ergibt sich zu etwa:

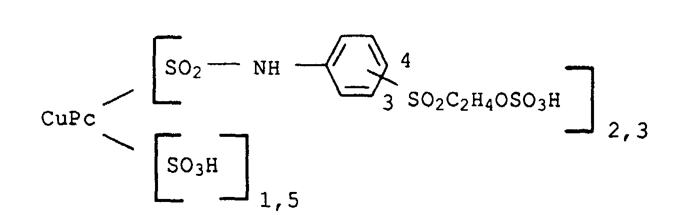

### Beispiel 8

In 500 ml Wasser wurden in Gegenwart eines Dispergiermittels und eines Entschäumers 450 g (1,6 mol) 4-(2-Sulfatoethyl)anilin eingetragen und durch Zugabe von festem Natriumhydrogencarbonat ein pH-Wert von 6,0 bis 6,5 eingestellt. Dazu wurden 0,4 mol Kupferphthalocyaninsulfonsäurechlorid (mit etwa 3,8 Sulfonsäurechloridgruppen) als feuchter Preßkuchen eingetragen, gefolgt von 0,1 mol 1-Methylimidazol. Dann wurde festes Natriumhydrogencarbonat zugegeben, um den pH-Wert bei 6,2 bis 6,5 zu halten. Die Reaktion war nach 8 h beendet. Der Farbstoff wurde aus der Lösung durch Sprühtrocknen isoliert. Seine Konstitution ergibt sich zu etwa:

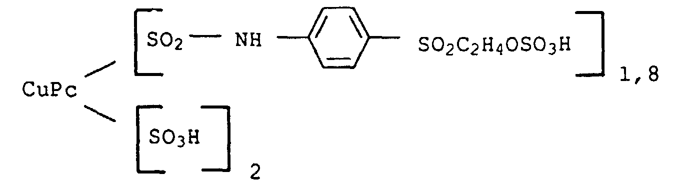

### Beispiel 9

a) In 200 ml Wasser wurden in Gegenwart eines Dispergiermittels 0,1 mol Kupferphthalocyaninsulfonsäurechlorid (mit etwa 3,8 Sulfonsäurechloridgruppen) als feuchter Preßkuchen suspendiert, 42,1 (0,15 mol) 3-(2-Sulfatoethyl)anilin und 0,8 g (0,01 mol) 1-Methylimidazol zugegeben und durch Zugabe von festem Natriumhydrogencarbonat ein pH-Wert von 6,2 bis 6,5 eingehalten. Nach 8 h Reaktionszeit ergibt sich die Konstitution zu etwa: 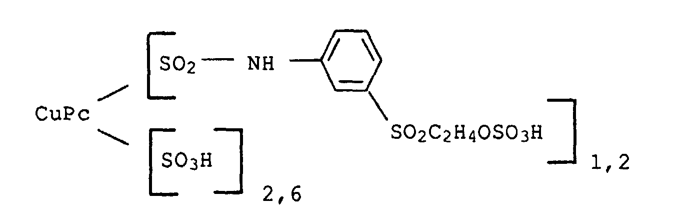
b) Nach 22 h Reaktionszeit ergibt sich die Konstitution zu etwa:

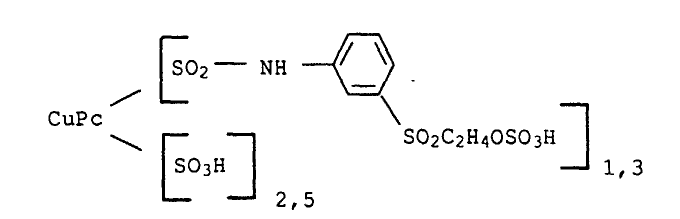

### Beispiel 10

In 500 ml Wasser wurden in Gegenwart eines Dispergiermittels und eines Entschäumers 340 g (1,2 mol) 4-(2-Sulfatoethyl)anilin eingetragen und durch Zugabe von festem Natriumhydrogencarbonat ein pH-Wert von 6,0 bis 6,5 eingestellt. Dazu wurden 0,4 mol Kupferphthalocyaninsulfonsäurechlorid (mit etwa 3,5 Sulfonsäurechloridgruppen) als feuchter Preßkuchen eingetragen, gefolgt von 0,1 mol 1-Methylimidazol. Dann wurde festes Natriumhydrogencarbonat zugegeben, um den pH-Wert bei 6,2 bis 6,5 zu halten. Die Reaktion war nach 8 h beendet. Der Farbstoff wurde aus der Lösung durch Sprühtrocknen isoliert. Seine Konstitution ergibt sich zu etwa:

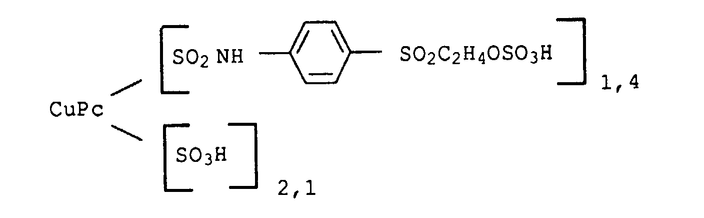

### Beispiel 11

In 230 ml Wasser wurden 87,3 g (0,3 mol) 4-(2-Sulfatoethylsulfonyl)anilin in Gegenwart eines Dispergiermittels und eines Entschäumers durch Zugabe von festem Natriumhydrogencarbonat bei einem pH-Wert von 6,0 bis 6,5 gelöst. Dazu wurden 0,1 mol Kupferphthalocyaninsulfonsäurechlorid (mit etwa 3,8 Sulfonsäurechloridgruppen) als feuchter Preßkuchen eingetragen, gefolgt von 4 g (0,05 mol) 1-Methylimidazol. Durch Zugabe von festem Natriumhydrogencarbonat wurde ein pH-Wert von 6,2 bis 6,6 eingehalten. Die Reaktion war nach 7 h beendet. Der Farbstoff wurde aus der Lösung durch Sprühtrocknen isoliert. Die Konstitution ergibt sich zu etwa:

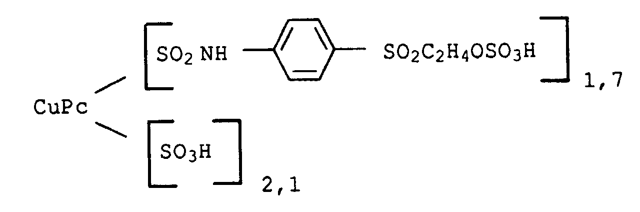

## Patentansprüche

1. Verfahren zur Herstellung von metallfreien oder metallhaltigen Phthalocyaninreaktivfarbstoffen, die als reaktive Gruppen eine oder mehrere Ethylsulfonylgruppen, welche in β-Position einen unter alkalischen Reaktionsbedingungen abspaltbaren Rest als Substituenten tragen, oder Vinylsulfonylgruppen aufweisen, durch Umsetzung eines metallfreien oder metallhaltigen Phthalocyaninsulfonsäurechlorids, mit primären oder sekundären Aminen, die eine oder mehrere Ethylsulfonylgruppen, welche in β-Position einen unter alkalischen Reaktionsbedingungen abspaltbaren Rest als Substituenten tragen, oder Vinylsulfonylgruppen aufweisen, und gegebenenfalls mit weiteren primären oder sekundären Aminen aus der aliphatischen, aromatischen oder heterocyclischen Reihe in Gegenwart eines Katalysators, dadurch gekennzeichnet, daß man die Umsetzung in Gegenwart eines Heterocyclus als Katalysator durchführt, der ausgewählt ist aus der Klasse, bestehend aus 1-(C₁-C₄-Alkyl)imidazolen, in denen die Alkylgruppe gegebenenfalls durch C₁-C₄-Alkoxy substituiert ist, 1-Carboxymethylimidazol, 1,2-Dimethylimidazol, 1-Methylimidazol-5-carbonsäure, 1-Carboxymethyl-1,3,4-triazol, 4-(C₁-C₄-Dialkylamino)pyridin, 4-(Pyrrolidin-l-yl)pyridin, 4-(Piperidin-1-yl)pyridin, 4-(Morpholin-4-yl)pyridin, 4-(Piperazin-1-yl)pyridin, 4-[4-(C₁-C₄-Alkyl)piperazin-1-yl]pyridin und Dimethyltetrazol.

2. Verfahren nach Anspruch 1, dadurch gekennzeichnet, daß man die Umsetzung in Gegenwart eines 1-(C₁-C₄-Alkyl)imidazols durchführt.

3. Verfahren nach Anspruch 1, dadurch gekennzeichnet, daß man die Umsetzung bei einer Temperatur von 0 bis 60°C vornimmt.

4. Verfahren nach Anspruch 1 zur Herstellung von Pthalocyaninreaktivfarbstoffen der Formel I 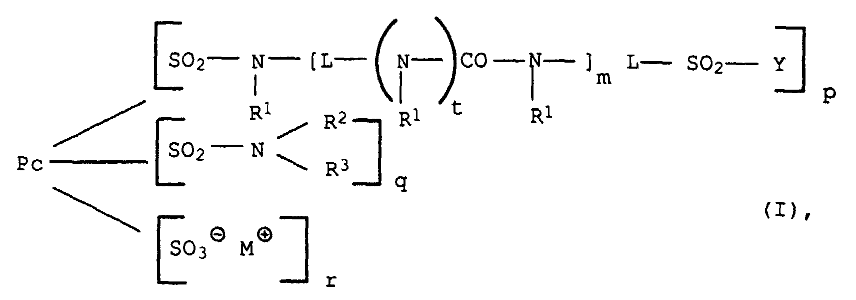 in der
Pc den Rest eines metallfreien oder metallhaltigen Phthalocyaninsystems, das gegebenenfalls durch Chlor oder Phenyl substituiert ist,
R¹ Wasserstoff oder C₁-C₆-Alkyl,
R² und R³ unabhängig voneinander jeweils Wasserstoff, C₁-C₆-Alkyl, das gegebenenfalls durch 1 oder 2 Sauerstoffatome in Etherfunktion unterbrochen ist, Phenyl oder zusammen mit dem sie verbindenden Stickstoffatom einen fünf- oder sechsgliedrigen gesättigten heterocyclischen Rest, der weitere Heteroatome aufweisen kann,
L C₂-C₄-Alkylen, das gegebenenfalls durch ein Sauerstoffatom in Etherfunktion unterbrochen ist, Naphthylen oder einen Rest der Formel 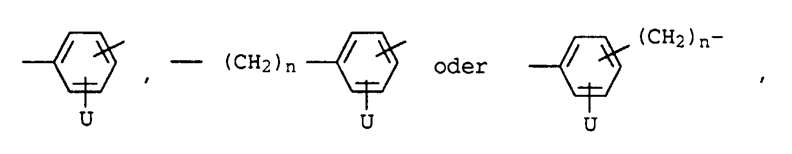 worin U für Wasserstoff, Hydroxysulfonylmethyl oder Hydroxysulfonyl und n für 1 oder 2 stehen,
Y Vinyl oder einen Rest der Formel C₂H₄-Q, worin Q für eine unter alkalischen Reaktionsbedingungen abspaltbare Gruppe steht,
M^{⊕} das Äquivalent eines Kations,
m 0 oder 1,
p 1 bis 3,
q 0 bis 3,
r 1 bis 3 und
t 0 oder 1 bedeuten,
mit der Maßgabe, daß die Summe von p, q und r höchstens 4 ist, dadurch gekennzeichnet, daß man ein Phthalocyaninsulfonsäurechlorid der Formel II 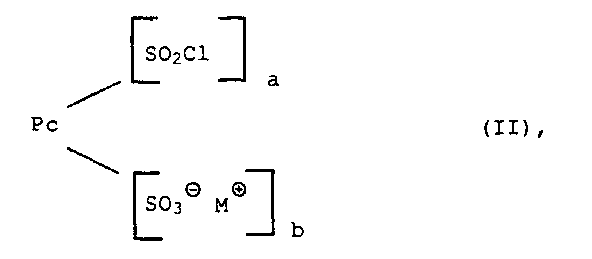 in der Pc und M^{⊕} jeweils die obengenannte Bedeutung besitzen und a 1 bis 4 und b 0 bis 3 bedeuten, mit der Maßgabe, daß die Summe von a und b höchstens 4 ist, oder eine Mischung von Phthalocyaninsulfonsäurechloriden der Formel II in wäßrigem Medium mit einem Amin der Formel III 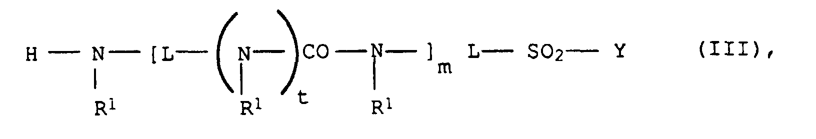 in der R¹, L, Y, m und t jeweils die obengenannte Bedeutung besitzen, und gegebenenfalls mit einem Amin der Formel IV 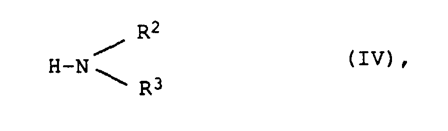 in der R² und R³ jeweils die obengenannte Bedeutung besitzen, wobei die Reihenfolge der Umsetzung mit den Aminen III und IV beliebig sein kann, umsetzt.

## Claims

1. A process for preparing reactive metal-free or metal-containing phthalocyanine dyes having one or more ethylsulfonyl groups substituted in the β-position by an alkali-detachable radical or vinylsulfonyl groups as the reactive groups by reacting a metal-free or metal-containing phthalocyaninesulfonyl chloride with primary or secondary amines having one or more ethylsulfonyl groups substituted in the β-position by an alkali-detachable radical or vinylsulfonyl groups and with or without further primary or secondary amines of the aliphatic, aromatic or heterocyclic series in the presence of a catalyst, which comprises conducting the reaction in the presence of a catalyst comprising a heterocycle selected from the group consisting of 1-(C₁-C₄-alkyl)imidazoles in which the alkyl group may be C₁-C₄-alkoxy-substituted, 1-carboxymethylimidazole, 1,2-dimethylimidazole, 1-methylimidazole-5-carboxylic acid, 1-carboxymethyl-1,3,4-triazole, 4-(C₁-C₄-dialkylamino)pyridine, 4-(1-pyrrolidinyl)pyridine, 4-(1-piperidinyl)pyridine, 4-(4-morpholinyl)pyridine, 4-(1-piperazinyl)pyridine, 4-[4-(C₁-C₄-alkyl)-1-piperazinyl]pyridine and dimethyltetrazole. piperazinyl]pyridine and dimethyltetrazole.

2. A process as claimed in claim 1, wherein the reaction is carried out in the presence of a 1-(C₁-C₄-alkyl)imidazole.

3. A process as claimed in claim 1, wherein the reaction is carried out at from 0 to 60°C.

4. A process as claimed in claim 1 for preparing reactive phthalocyanine dyes of the formula I 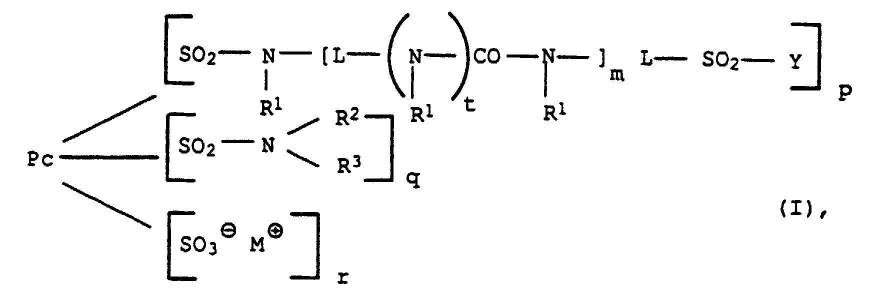 where
Pc is the radical of a metal-free or metal-containing phthalocyanine system which may be substituted by chlorine or phenyl,
R¹ is hydrogen or C₁-C₆-alkyl,
R² and R³ are singly and independently of each other hydrogen, C₁-C₆-alkyl, which may be interrupted by 1 or 2 oxygen atoms in ether function, or phenyl, or together, combined with the nitrogen atom joining them together, a five- or six-membered saturated heterocyclic radical which may contain further hetero atoms,
L is C₂-C₄-alkylene, which may be interrupted by an oxygen atom in ether function, naphthylene or a radical of the formula 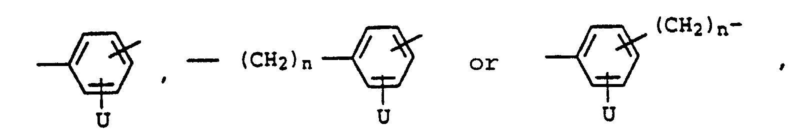 where U is hydrogen, hydroxysulfonylmethyl or hydroxysulfonyl and n is 1 or 2,
Y is vinyl or a radical of the formula C₂H₄-Q, where Q is an alkali-detachable group,
M^{⊕} is the equivalent of a cation,
m is 0 or 1,
p is from 1 to 3,
q is from 0 to 3,
r is from 1 to 3, and
t is 0 or 1,
with the proviso that the sum of p, q and r is not more than 4, wherein a phthalocyaninesulfonyl chloride of the formula II 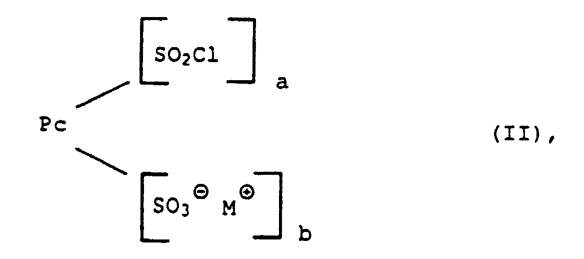 where Pc and M^{⊕} are each as defined above, a is from 1 to 4 and b is from 0 to 3, with the proviso that the sum of a and b is not more than 4, or a mixture of phthalocyaninesulfonyl chlorides of the formula II is reacted in an aqueous medium with an amine of the formula III 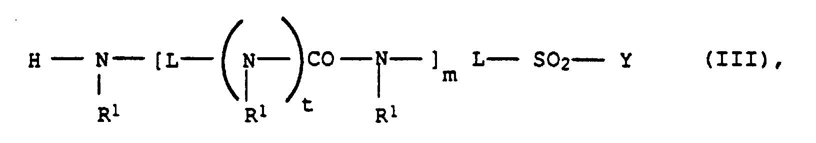 where R¹, L, Y, m and t are each as defined above, and with or without an amine of the formula IV 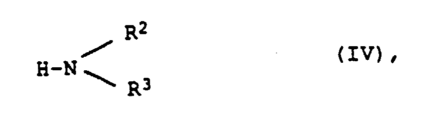 where R² and R³ are each as defined above, the order of reaction with the amines III and IV being freely choosable.

## Revendications

1. Procédé de préparation de colorants phtalocyanine réactifs, contenant ou ne contenant pas de métal, présentant en tant que groupements réactifs des groupements vinylsulfonyle ou un ou plusieurs groupements éthylsulfonyle portant en position β, en tant que substituant, un reste séparable dans des conditions réactionnelles alcalines, par réaction d'un chlorure d'acide phtalocyanine-sulfonique contenant ou ne contenant pas de métal, avec des amines primaires ou secondaires qui présentent des groupements vinylsulfonyle ou un ou plusieurs groupements éthylsulfonyle, portant en position β, en tant que substituant, un reste séparable dans des conditions réactionnelles alcalines, et éventuellement avec d'autres amines primaires ou secondaires de la série des amines aliphatiques, aromatiques ou hétérocycliques, en présence d'un catalyseur, caractérisé en ce que l'on met la réaction en oeuvre en présence d'un hétérocycle en tant que catalyseur, lequel est choisi dans le groupe formé par les 1-(alkyle en C₁-C₄)imidazoles dans lesquels le groupement alkyle peut être substitué par un groupement alcoxy en C₁-C₄, le 1-carboxyméthylimidazole, le 1,2-diméthylimidazole, l'acide 1-méthylimidazole-5-carboxylique, le 1-carboxyméthyl-1, 3, 4-triazole, la 4-(dialkylamino en C₁-C₄)pyridine, la 4-(pyrrolidin-1-yle)pyridine, la 4-(pipéridin-1-yle)pyridine, la 4-(morpholin-4-yle)pyridine, la 4-(pipérazin-1-yle)pyridine, la 4-[4-(alkyle en C₁-C₄)Pipérazin-1-yle]pyridine et le diméthyltétrazole.

2. Procédé selon la revendication 1, caractérisé en ce que la réaction est mise en oeuvre en présence d'un 1-(alkyle en C₁-C₄)imidazole.

3. Procédé selon la revendication 1, caractérisé en ce que l'on mène la réaction à une température de 0-60°C.

4. Procédé selon la revendication 1 pour la préparation de colorants phtalocyanine réactifs de formule I 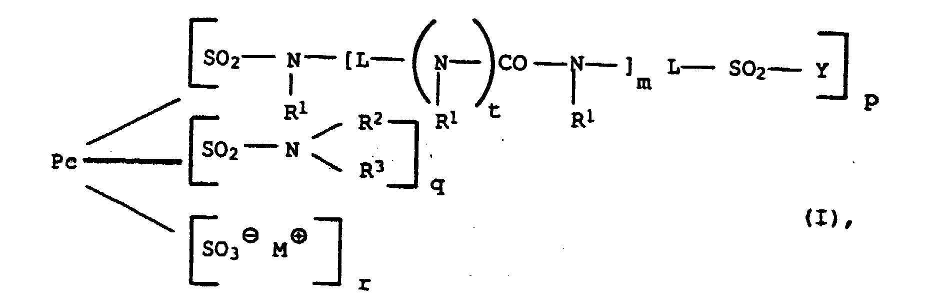 dans laquelle
Pc est le reste d'un système phtalocyanique contenant ou ne contenant pas de métal, pouvant éventuellement être substitué par du chlore ou un groupement phényle,
R¹ représente un atome d'hydrogène ou un groupement alkyle en C₁-C₆,
R² et R³ représentent chacun indépendamment l'un de l'autre, un atome d'hydrogène, un groupement alkyle en C₁-C₆, pouvant éventuellement être interrompu par 1 ou 2 atomes d'oxygène en fonction éther, un groupement phényle ou bien, avec l'atome d'azote qui les relie, un reste hétérocyclique saturé à 5 ou 6 maillons, pouvant présenter d'autres hétéroatomes,
L représente un groupement alkylène en C₂-C₄ pouvant éventuellement être interrompu par un atome d'oxygène en fonction éther, un groupement naphtylène ou un reste de formule 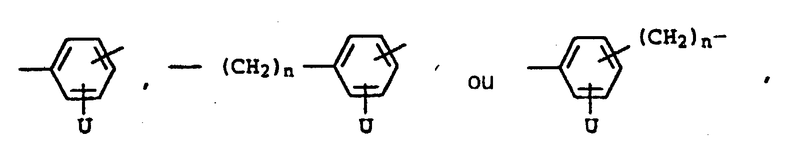 dans lesquelles U est mis pour un atome d'hydrogène, un groupement hydroxysulfonylméthyle ou hydrosulfonyle et n vaut 1 ou 2,
Y représente un groupement vinyle ou un reste de formule C₂H₄-Q, où Q est mis pour un groupement séparable dans des conditions réactionnelles alcalines,
M^{⊕} représente l'équivalent d'un cation,
m vaut 0 ou 1,
p vaut de 1 à 3,
q vaut de 0 à 3,
r vaut de 1 à 3, et
t vaut 0 ou 1,
étant spécifié que la somme de p, q et r vaut au maximum 4, caractérisé en ce que l'on fait réagir un chlorure d'acide phtalocyanine-sulfonique de formule II 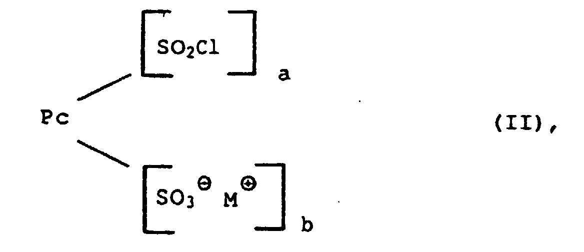 dans laquelle Pc et M^{⊕} prennent chacun la signification susmentionnée et a vaut de 1 à 4, et b vaut de O à 3, étant spécifié que la somme de a et b vaut au maximum 4, ou bien un mélange de chlorures d'acide phtalocyanine-sulfonique de formule II en milieu aqueux avec une amine de formule III 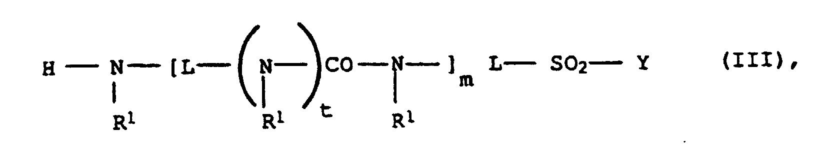 dans laquelle R¹, L, Y, m et t prennent chacun la signification susmentionnée, et éventuellement avec une amine de formule IV 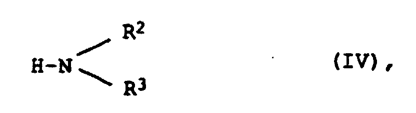 dans laquelle R² et R³ prennent chacun la signification susmentionnée, l'ordre de mise en oeuvre des réactions avec les amines III et IV étant indifférent.
